# EUROPEAN PATENT APPLICATION

(11) **EP 4 697 476 A1**
(43) Date of publication of application: **18.02.2026**
(21) Application number: 25190310.0
(22) Date of filing: 17.07.2025
(51) Int. Cl.: H01M 50/342

(54) **SECONDARY BATTERY**

(30) Priority: 13.08.2024 KR 20240108186
(71) Applicant: SAMSUNG SDI CO., LTD., Yongin-si, Gyeonggi-do 17084 (KR)
(72) Inventor: GUEN, Minhyung, 17084 Yongin-Si (KR)
(74) Representative: Marks & Clerk LLP

(57) **Abstract**

A secondary battery including an electrode assembly including a first electrode, a separator, and a second electrode, a case accommodating the electrode assembly, and a safety vent at a side of the case, the safety vent including a plurality of vent plates, and each of the plurality of vent plates having a different rupture pressure.

## Description

### BACKGROUND

### 1. Field

Aspects of embodiments of the present disclosure relate to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

A secondary battery according to an embodiment of the present disclosure includes an electrode assembly in which a first electrode, a separator, and a second electrode are sequentially stacked, a case accommodating the electrode assembly, and a safety vent formed at one side of the case. The safety vent includes a plurality of vent plates, and each of the plurality of vent plates has a different rupture pressure.

According to an embodiment of the present disclosure, respective thicknesses of the plurality of vent plates may be different from one another.

According to an embodiment of the present disclosure, respective areas of the plurality of vent plates may be different from one another.

According to an embodiment of the present disclosure, the safety vent may include a first notch formed between adjacent vent plates among the plurality of vent plates.

According to an embodiment of the present disclosure, a connection portion formed between a first surface of each of the plurality of vent plates and an adjacent first surface of the first notch may have a different minimum thickness.

According to an embodiment of the present disclosure, the secondary battery described above may further include a second notch formed between each of the plurality of vent plates and the case.

According to an embodiment of the present disclosure, a connection portion formed between a first surface of each of the plurality of vent plates and an adjacent first surface of the second notch may have a different minimum thickness.

According to an embodiment of the present disclosure, the plurality of vent plates may include a first vent plate, a second vent plate, a third vent plate, and a fourth vent plate.

According to an embodiment of the present disclosure, the safety vent may be radially divided from an arbitrary point of the safety vent to form the first vent plate, the second vent plate, the third vent plate, and the fourth vent plate.

According to an embodiment of the present disclosure, a thickness of the first vent plate may be greater than a thickness of the second vent plate, the thickness of the second vent plate may be greater than a thickness of the third vent plate, and the thickness of the third vent plate may be greater than a thickness of the fourth vent plate.

According to an embodiment of the present disclosure, the secondary battery described above may further include a first-1 notch (first sub-notch) formed between the first vent plate and the second vent plate, a first-2 notch (second sub-notch) formed between the second vent plate and the third vent plate, a first-3 notch (third sub-notch) formed between the third vent plate and the fourth vent plate, and a first-4 notch (fourth sub-notch) formed between the fourth vent plate and the first vent plate.

According to an embodiment of the present disclosure, a first minimum thickness of a connection portion formed between the first vent plate and the first-1 notch (first sub-notch), a second minimum thickness of a connection portion formed between the second vent plate and the first-2 notch (second sub-notch), a third minimum thickness of a connection portion formed between the third vent plate and the first-3 notch (third sub-notch), and a fourth minimum thickness of a connection portion formed between the fourth vent plate and the first-4 notch (fourth sub-notch) may be sequentially increased.

According to an embodiment of the present disclosure, the secondary battery described above may further include a second-1 notch (fifth sub-notch) formed between the first vent plate and the case, a second-2 notch (sixth sub-notch) formed between the second vent plate and the case, a second-3 notch (seventh sub-notch) formed between the third vent plate and the case, and a second-4 notch (eithth sub-notch) formed between the fourth vent plate and the case.

According to an embodiment of the present disclosure, a first minimum thickness of a connection portion formed between the first vent plate and the second-1 notch (fifth sub-notch), a second minimum thickness of a connection portion formed between the second vent plate and the second-2 notch (sixth sub-notch), a third minimum thickness of a connection portion formed between the third vent plate and the second-3 notch (seventh sub-notch), and a fourth minimum thickness of a connection portion formed between the fourth vent plate and the second-4 notch (eighth sub-notch) may be sequentially increased.

According to an embodiment of the present disclosure, the first-1 notch (first sub-notch), the first-2 notch (second sub-notch), the first-3 notch (third sub-notch), and the first-4 notch (fourth sub-notch) may have the same thickness.

According to an embodiment of the present disclosure, the first-1 notch (first sub-notch), the first-2 notch (second sub-notch), the first-3 notch (third sub-notch), and the first-4 notch (fourth sub-notch) may have different thicknesses.

According to an embodiment of the present disclosure, respective first surfaces of the first vent plate, the second vent plate, the third vent plate, and the fourth vent plate may be disposed in a same plane with one another.

According to an embodiment of the present disclosure, with respect to the first surface of the first vent plate, the first-1 notch (first sub-notch), the first-2 notch (second sub-notch), the first-3 notch (third sub-notch), and the first-4 notch (fourth sub-notch) may have the same depth.

According to an embodiment of the present disclosure, respective second surfaces of the plurality of vent plates may not be disposed in a same plane with one another, the second surfaces being opposite to the first surfaces.

According to an embodiment of the present disclosure, the safety vent may include the plurality of vent plates arranged side by side in one direction.

At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating an example of a secondary battery according to an embodiment of the present disclosure.
FIG. 2 is an exploded perspective view illustrating an example of a secondary battery according to an embodiment of the present disclosure.
FIG. 3 is an enlarged perspective view of a portion A in FIG. 1.
FIG. 4 is a cross-sectional view taken along a line B in FIG. 3.
FIG. 5 is a perspective view illustrating the other surface of a safety vent, which is opposite to one surface of the safety vent, according to an embodiment of the present disclosure.
FIG. 6 is an enlarged perspective view of a portion C in FIG. 5.
FIG. 7 is a plan view illustrating a safety vent according to an embodiment of the present disclosure.
FIG. 8 is a plan view illustrating a safety vent according to an embodiment of the present disclosure.
FIG. 9 is a plan view illustrating a safety vent according to an embodiment of the present disclosure.
FIG. 10 is a plan view illustrating a safety vent according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements throughout. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B**,** C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

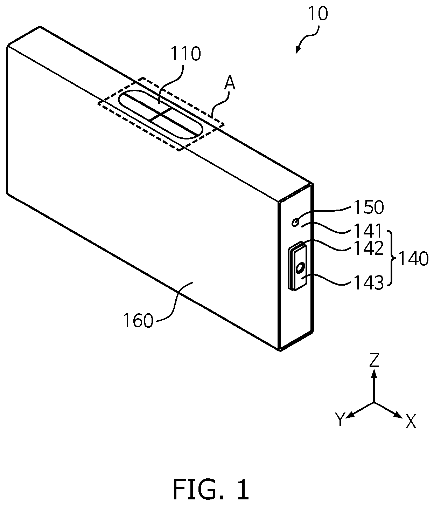

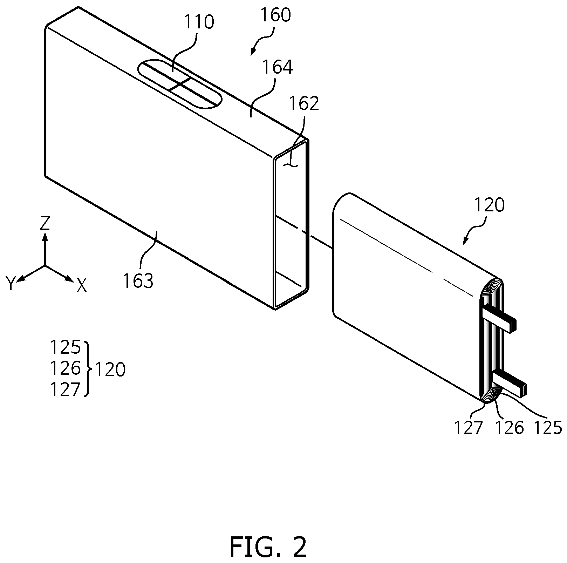

FIG. 1 is a perspective view illustrating an example of a secondary battery according to an embodiment of the present disclosure, and FIG. 2 is a partial exploded perspective view illustrating a case of the secondary battery in FIG. 1.

Referring to FIGS. 1 and 2, a secondary battery 10 may include an electrode assembly 120, a case 160 accommodating the electrode assembly 120, and a cap assembly 140. The electrode assembly 120 may include a first electrode plate (e.g., a first electrode 125), a separator 126, and a second electrode plate (e.g., a second electrode 127) wound or stacked therein.

The case 160 may form the overall outer appearance of the secondary battery 10 and may be made of a conductive metal, such as aluminum, an aluminum alloy, or a nickel-plated steel. The case 160 may include long-side wall portions 163 opposite to each other, short-side wall portions 164 opposite to each other, and an opening 162 formed at one side of the case 160. The long-side wall portions 163 may include a first long-side wall portion and a second long-side wall portion. The first long-side wall portion and the second long-side wall portion may be spaced apart from each other while facing each other. The short-side wall portions 164 may include a first short-side wall portion and a second short-side wall portion. The first short-side wall portion and the second short-side wall portion may be spaced apart from each other while facing each other. In the illustrated example, the area of each of the first short-side wall portion and the second short-side wall portion may be smaller than the area of each of the first long-side wall portion and the second long-side wall portion.

The electrode assembly 120 may be accommodated within the case 160. The electrode assembly 120 may be formed by winding or stacking a stack of a first electrode plate, a separator, and a second electrode plate, which are formed as thin plates or films. When the electrode assembly is a wound stack, a winding axis may be parallel to the longitudinal direction of the case 160. In other embodiments, the electrode assembly may be a stack type rather than a winding type, and the shape of the electrode assembly is not limited in the present disclosure. In addition, the electrode assembly may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case 160, and the number of electrode assemblies in the case 160 is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite or carbon, onto a first electrode substrate formed of a metal foil, such as copper, a copper alloy, nickel, or a nickel alloy. The first electrode plate may include a first electrode tab (or a first uncoated portion) that is a region onto which the first electrode active material is not applied. The first electrode tab may serve as a path for current flow between the first electrode plate and the cap assembly 140. In some embodiments, the first electrode tab may be formed by cutting the first electrode plate in advance during a fabrication process of the first electrode plate such that the first electrode tab protrudes toward a first side and extends further out than the separator without requiring additional cutting.

The second electrode plate may be formed by applying a second electrode active material, such as a transition metal oxide, onto a second electrode substrate formed of a metal foil, such as aluminum or an aluminum alloy. The second electrode plate may include a second electrode tab (or a second uncoated portion) that is a region onto which the second electrode active material is not applied. The second electrode tab may serve as a path for current flow between the second electrode plate and the cap assembly 140. In some embodiments, the second electrode tab may be formed by cutting the second electrode plate in advance during a fabrication process of the second electrode plate such that the second electrode tab protrudes toward a second side and extends further than the separator without requiring additional cutting.

The cap assembly 140 may be coupled to the opening 162 formed at one side of the case 160. In an embodiment, the cap assembly 140 may include a cap plate 141, a terminal plate 143, and a sealing member 142 that insulates the cap plate 141 from the terminal plate 143. The terminal plate 143 may be coupled to a current collector to be electrically connected to the electrode assembly. The cap assembly 140 may be disposed to cover one side of the case 160. The cap assembly 140 may be bonded to the case 160 through a method such as welding to seal the interior of the case 160 after the electrode assembly is accommodated in the case 160.

In some embodiments, an electrolyte injection hole 150 may be formed at the cap plate 141 of the cap assembly 140. Through the electrolyte injection hole 150, the electrolyte can be injected into the case 160. For example, as illustrated in FIG. 1, the electrolyte injection hole 150 may be formed at the cap plate 141. After the injection of the electrolyte is complete, the electrolyte injection hole 150 may be sealed by using a sealing means such as a stopper.

In an embodiment, a safety vent 110 may be disposed at one side (e.g., one surface) of the cap assembly 140 or the case 160. For example, as illustrated in FIG. 1, the safety vent 110 may be formed at one surface (i.e., side surface) of the case 160 rather than at the cap assembly 140. However, the installation location of the safety vent 110 may vary, e.g., the safety vent 110 may be formed at the cap assembly 140. The safety vent 110 may be configured to prevent an explosion of the secondary battery 10 or prevent a chain exothermic reaction of other secondary batteries arranged adjacent to the secondary battery 10.

In an embodiment, the safety vent 110 may be configured to rupture in response to an internal pressure of the secondary battery 10 exceeding a predetermined pressure (e.g., a predetermined rupture pressure). Here, the rupture pressure may be adjusted differently depending on the material of the secondary battery, the purpose of use of the secondary battery, and the like. Further, in an embodiment, the safety vent 110 may include a plurality of vent plates. Therefore, the safety vent 110 may have a plurality of rupture pressures. That is, each of the plurality of vent plates may have a different rupture pressure. This will be described in more detail later.

In an embodiment, the safety vent 110 may include a resin material. The resin material is a polymer substance that has various forms and properties. The resin material may have heat resistance such that it does not rupture at the internal temperature of the secondary battery 10, which is approximately 200 °C. Additionally, the resin material may be easily molded into a desired shape, and its cost may be lower than that of a metal material, reducing the manufacturing cost of the safety vent 110. The resin material may include a high-heat-resistant material. Moreover, the high-heat-resistant resin material may include one or more selected from polyimide (PI), polytetrafluoroethylene (PTFE), polypropylene (PP), polyphenylene sulfide (PPS), or a mixture thereof. However, the safety vent 110 may alternatively be formed of a metal material instead of the resin material.

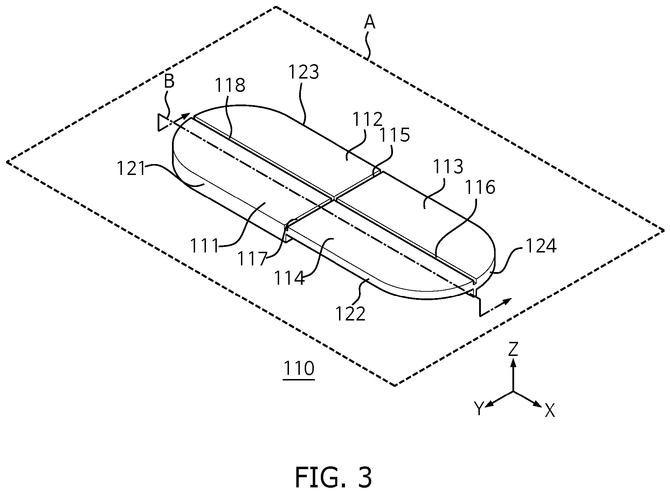

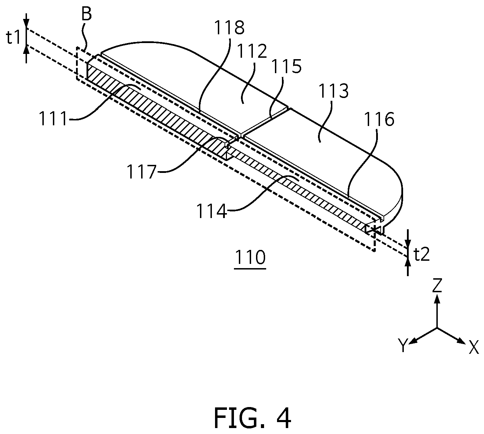

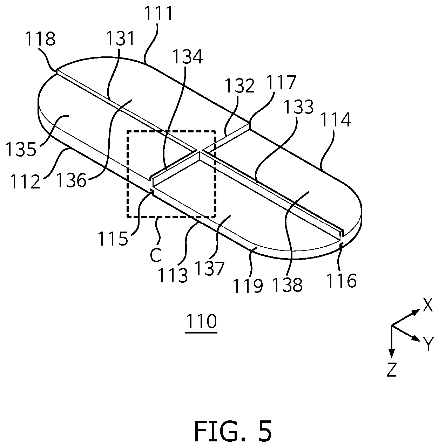

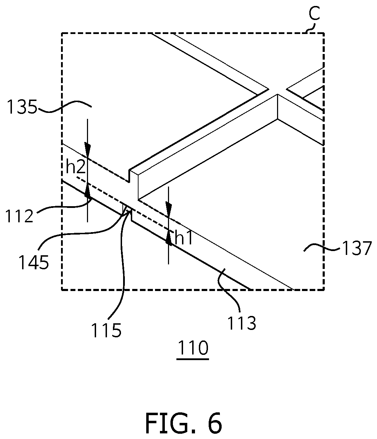

FIG. 3 is an enlarged perspective view of a portion A in FIG. 1, and FIG. 4 is a cross-sectional view taken along a line B in FIG. 3. FIG. 5 is a perspective view illustrating the other surface of the safety vent, which is opposite an exterior surface of the safety vent, according to an embodiment of the present disclosure. FIG. 6 is an enlarged perspective view of a portion C in FIG. 5.

Referring to FIGS. 1 and 3-6, the safety vent 110 may be formed at one surface of the case 160, e.g., at a portion A of FIG. 1. The safety vent 110 may include a plurality of vent plates, each of which may have a different rupture pressure. For example, each vent plate of the safety vent 110 may be configured to rupture in a response to a case where an internal pressure exceeds a rupture pressure, which is a threshold pressure determined by a thickness, an area, a thickness of the connection between a notch and the vent plate, or the like.

For example, the plurality of vent plates may include a first vent plate 111, a second vent plate 112, a third vent plate 113, and a fourth vent plate 114. Each of the plurality of vent plates may have a different rupture pressure. For example, referring to FIGS. 3 to 5, the plurality of vent plates may include four vent plates. In another example, the plurality of vent plates may include two, three, five or more vent plates.

In an embodiment, the thicknesses (e.g., along the Z-axis direction) of the plurality of vent plates 111, 112, 113, and 114 may be different from one another. For example, a thickness t1 of the first vent plate 111 may be greater than a thickness of the second vent plate 112, the thickness of the second vent plate 112 may be greater than a thickness of the third vent plate 113, and the thickness of the third vent plate 113 may be greater than a thickness t2 of the fourth vent plate 114. For example, the thickness of the respective vent plates may increase by increments of 0.2t. Thus, by using the plurality of vent plates having different thicknesses, the rupture pressure may be adjusted for each of the plurality of vent plates.

In an embodiment, a first surface of the first vent plate 111, a first surface of second vent plate 112, a first surface of third vent plate 113, and a first surface of fourth vent plate 114 may be located in the same plane with one another (e.g., coplanar or level with each other). For instance, the first surface of each of the plurality of vent plates corresponding to (e.g., part of) a first surface of the safety vent 110 is a surface that is exposed outwardly from the case 160 (e.g., a part of an exterior surface of the safety vent 110 that faces an exterior of the case 160), and the first surfaces of the plurality of vent plates are respectively arranged on the same plane. Accordingly, from the outer appearance of the secondary battery, it may not be revealed whether the plurality of vent plates forming the safety vent 110 have different thicknesses.

As shown in FIG. 5, the second surface of the safety vent 110 (i.e., an interior surface of the safety vent 110 that faces an interior of the case 160) may be a surface opposite to the first surface of the safety vent 110 that is the surface that is exposed outwardly from the case 160. In an embodiment, second surfaces of the plurality of vent plates each corresponding to the second surface of the safety vent 110 may include a second surface 136 of the first vent plate, a second surface 135 of the second vent plate, a second surface 137 of the third vent plate, and a second surface 138 of the fourth vent plate. In a case where each of the plurality of vent plates has a different thickness, the second surfaces 135, 136, 137, and 138 of the plurality of vent plates may not be located in the same plane with one another, while the first surfaces of the plurality of vent plates are located in the same plane with one another.

In an embodiment, referring to FIGS. 5 and 6, first notches 115, 116, 117, and 118 may be formed between adjacent vent plates of the plurality of vent plates. For example, first notches 115, 116, 117, and 118 may be formed between adjacent vent plates among the plurality of vent plates, and a thickness of a connection portion between each first notch and the vent plate, e.g., a minimum thickness, may determine the rupture pressure of each vent plate.

In detail, as shown in FIGS. 3 to 5, the first notches may include a first sub-notch 118 formed between the first vent plate 111 and the second vent plate 112, a second sub-notch 115 formed between the second vent plate 112 and the third vent plate 113, a third sub-notch 116 formed between the third vent plate 113 and the fourth vent plate 114, and a fourth sub-notch 117 formed between the fourth vent plate 114 and the first vent plate 111.

Each sub-notch of the first notches 115, 116, 117, and 118 may have a first surface facing in the same direction as the first surface of each of the plurality of vent plates (the surface exposed outwardly from the case), and a second surface that is opposite to the first surface. For example, referring to FIG. 3, the first surface of each sub-notch may face an exterior of the case 160, and may be at a predetermined depth with respect to the first surface of an adjacent vent plate. For example, referring to FIG. 5, the second surface of each sub-notch may face an interior of the case 160, and may be opposite a corresponding first surface. For example, referring to FIG. 3, each sub-notch may extend continuously along an entire length of a corresponding one of the vent plates.

In an embodiment, as shown in FIG. 5, the second surfaces of the first notches (i.e., a second surface 131 of the first sub-notch 118, a second surface 134 of the second sub-notch 115, a second surface 133 of the third sub-notch 116, and a second surface 132 of the fourth sub-notch 117) may be located in the same plane with one another. Further, the second surface 131 of the first sub-notch 118, the second surface 134 of the second sub-notch 115, the second surface 133 of the third sub-notch 116, and the second surface 132 of the fourth sub-notch 117 may have the same width (e.g., a width of the second surface 134 of the second sub-notch 115 in the Y-axis direction may equal a width of the second surface 133 of the third sub-notch 116 in the X-axis direction).

In an embodiment, the first sub-notch 118 and the third sub-notch 116 may be positioned on the same line (e.g., may be collinear along the Y-axis direction), and the second sub-notch 115 and the fourth sub-notch 117 may be positioned on the same line (e.g., may be collinear along the X-axis direction). In an embodiment, the first sub-notch 118 and the third sub-notch 116 may intersect perpendicularly with the second sub-notch 115 and the fourth sub-notch 117. For example, as illustrated in FIGS. 3 to 5, the intersection of the first sub-notch 118 and the third sub-notch 116 with the second sub-notch 115 and the fourth sub-notch 117 may be formed at the center of the safety vent 110.

A distance between the first surface and the second surface of each first notch may correspond to the thickness of the first notch. For example, each of the first sub-notch 118, the second sub-notch 115, the third sub-notch 116, and the fourth sub-notch 117 may have the same thickness. In another example, each of the first sub-notch 118, the second sub-notch 115, the third sub-notch 116, and the fourth sub-notch 117 may have a different thickness. For example, the thickness of each of the first notches 118, 115, 116, and 117 may fall within a range from 130 µm to 150 µm, which may result in a difference in rupture pressure of 2 KgF/mm². (KgF, or kilogram-force, may also be represented in Newtons, i.e. 2 KgF/mm² is approximately 19.62N/mm²).

For example, referring to FIG. 6, a connection portion may be formed between the first surface of each of the plurality of vent plates 111, 112, 113, and 114 and adjacent first surfaces of the first notches 115, 116, 117, and 118. A minimum thickness h1 of the connection portion may be defined as the vertical distance between the second surface of each of the plurality of vent plates 111, 112, 113, and 114 and the first surfaces of the first notches 115, 116, 117, and 118. For example, as illustrated in FIG. 6, a minimum thickness h1 of a connection portion of the second sub-notch 115 formed in the safety vent 110 may be defined as the vertical distance between the second surface 137 of the third vent plate 113 the first surface 145 of the second sub-notch 115.

In an embodiment, a first minimum thickness of a connection portion formed between the first vent plate 111 and the first sub-notch 118, a second minimum thickness h2 of a connection portion formed between the second vent plate 112 and the second sub-notch 115, a third minimum thickness h1 of a connection portion formed between the third vent plate 113 and the third sub-notch 116 (e.g., or between the third vent plate 113 and the second sub-notch 115, and a fourth minimum thickness of a connection portion between the fourth vent plate 114 and the fourth sub-notch 117 may be different from one another.

In an embodiment, the first minimum thickness of the connection portion formed between the first vent plate 111 and the first sub-notch 118, the second minimum thickness h2 of the connection portion formed between the second vent plate 112 and the second sub-notch 115, the third minimum thickness h1 of the connection portion formed between the third vent plate 113 and the third sub-notch 116, and the fourth minimum thickness of the connection portion between the fourth vent plate 114 and the fourth sub-notch 117 may be sequentially increased, and the minimum thickness between each vent plate and the notch may determine the rupture pressure of each vent plate.

In an embodiment, depths of the first sub-notch 118, the second sub-notch 115, the third sub-notch 116, and the fourth sub-notch 117 relative to the first surface of each vent plate may be the same or may be sequentially increased. Additionally, in the illustrated examples of FIGS. 3 to 6, each first notch has a rectangular shape. However, each of the first notches may have a V-shape, a U-shape, a semicircular shape, or the like.

In an embodiment, side portions of the safety vent 110 may include a side portion 121 of the first vent plate 111, a side portion 123 of the second vent plate 112, a side portion 124 of the third vent plate 113, and a side portion 122 of the fourth vent plate 114, and the side portions of the respective vent plates may be coupled to the case 160. The respective side portions of the safety vent 110 that are coupled with the case 160 may have different thicknesses based on the thicknesses of the vent plates, which may affect the rupture pressure of each vent plate.

In another embodiment, in a case where the side portion of each vent plate is coupled to the case 160, a second notch 119 may be provided between the case 160 and the side portion of each vent plate, and the second notch may determine the rupture pressure of each vent plate. For example, the second notches may include a fifth sub-notch formed between the case 160 and the first vent plate 111, a sixth sub-notch formed between the case 160 and the second vent plate 112, a seventh sub-notch formed between the case 160 and the third vent plate 113, and an eighth sub-notch formed between the case 160 and the fourth vent plate 114. For example, the second notch may include a sub-notch formed between the case 160 and each of the side portions 121 to 124, e.g., formed as a groove in each of the side portions 121 to 124.

A connection portion may be formed between the first surface of each of the plurality of vent plates 111, 112, 113, and 114 and an adjacent first surface of the second notch. A minimum thickness of the connection portion may be defined as the shortest distance between an edge where the second notch contacts the second surface of each vent plate and an edge where the case contacts the first surface of the second notch.

In an embodiment, a first minimum thickness of a connection portion formed between the first vent plate and the second notch, a second minimum thickness of a connection portion formed between the second vent plate and the second notch, a third minimum thickness of a connection portion formed between the third vent plate and the second notch, and a fourth minimum thickness of a connection portion between the fourth vent plate and the second notch may be different from one another.

In an embodiment, the first minimum thickness of the connection portion formed between the first vent plate and the second notch, the second minimum thickness of the connection portion formed between the second vent plate and the second notch, the third minimum thickness of the connection portion formed between the third vent plate and the second notch, and the fourth minimum thickness of the connection portion formed between the fourth vent plate and the second notch may be sequentially increased.

For example, the first notch and the second notch may be provided simultaneously. In this case, the minimum thickness of the connection portion between each of the first and second notches and each vent plate may determine the rupture pressure of each vent plate. In another example, only one of the first notch or the second notch may be formed.

If all of the vent plates were to rupture simultaneously, a significant increase in pressure expelled from the secondary battery could have been triggered in a short period of time. Such a large pressure increase in a short period of time may cause a misalignment of the internal electrode assembly, which in turn, may cause a short circuit of the electrode plates, thereby causing a thermal runaway. In contrast, according to an embodiment, the safety vent 110 has a plurality of vent plates with different rupture pressures, such that the plurality of vent plates may rupture sequentially, e.g., the safety vent 110 may rupture sequentially in four stages in a clockwork direction, thereby reducing a potential for a thermal runaway described above.

In an embodiment, as illustrated in FIG. 3, the safety vent 110 may be radially divided from an arbitrary point of the safety vent 110 into the first vent plate 111, the second vent plate 112, the third vent plate 113, and the fourth vent plate 114. For example, the area of the safety vent 110 may be radially divided from the center of the safety vent 110 by the plurality of vent plates.

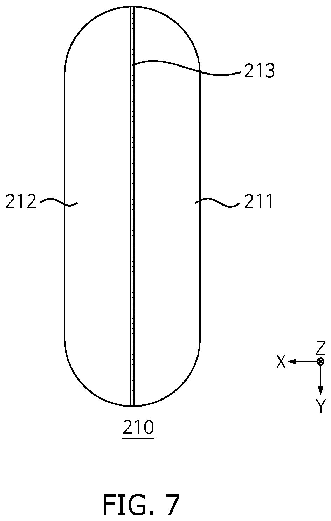

FIG. 7 is a plan view illustrating a safety vent according to an embodiment of the present disclosure.

Referring to FIG. 7, a safety vent 210 may include two vent plates, e.g., a first vent plate 211 and a second vent plate 212. A first notch 213 may be formed between the first vent plate 211 and the second vent plate 212. Additionally, or optionally, a second notch may be formed between each of the vent plates and the case.

In an embodiment, the first notch 213, which separates the plurality of vent plates, may not pass through the center of the safety vent 210. For example, the first notch may pass through an arbitrary point, and the areas of the respective vent plates may be different from each other.

In an embodiment, the thickness and the area of each vent plate may vary, and the width, depth, and thickness of each of the first notch and the second notch, as well as the minimum thickness of the connection portion of each of the first notch and the second notch, may also vary.

For example, referring to FIG. 7, the first notch 213 may be formed in a direction parallel to the Y-axis direction. In another example, the first notch may be formed in a direction perpendicular to the Y-axis direction.

With this configuration, the rupture pressures of the plurality of vent plates may be artificially controlled, allowing each vent plate to have a different rupture pressure.

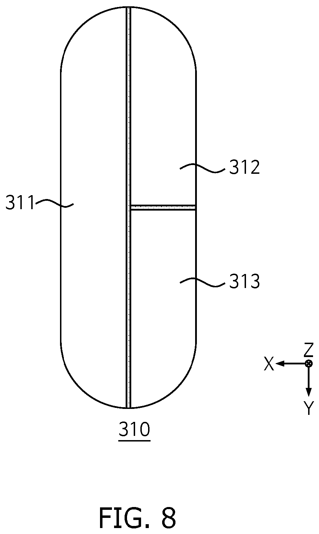

FIG. 8 is a plan view illustrating a safety vent according to an embodiment of the present disclosure.

Referring to FIG. 8, a safety vent 310 may include three vent plates, e.g., a first vent plate 311, a second vent plate 312, and a third vent plate 313 separated from each other by a first notch. The first notch may include a first sub-notch formed between the first vent plate 311 and the second vent plate 312, a second sub-notch formed between the first vent plate 311 and the third vent plate 313, and a third sub-notch formed between the second vent plate 312 and the third vent plate 313.

In an embodiment, the thicknesses of the first sub-notch to the third sub-notch may be the same, and the first sub-notch to the third sub-notch may be formed at the same depth with respect to first surfaces of the first to third vent plates 311, 312, and 313. A connection portion formed between the first vent plate 311 and the first sub-notch and the second sub-notch may have a first minimum thickness, a connection portion between the second vent plate 312 and the first and third sub-notches may have a second minimum thickness, and a connection portion formed between the third vent plate 313 and the second and third sub-notches may have a third minimum thickness.

With this configuration, the rupture pressures of the plurality of vent plates may be artificially adjusted, allowing each vent plate to have a different rupture pressure.

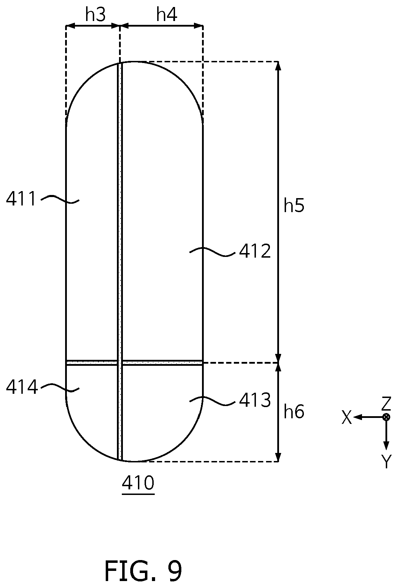

FIG. 9 is a plan view illustrating a safety vent according to an embodiment of the present disclosure.

Referring to FIG. 9, a safety vent 410 may include a first vent plate 411, a second vent plate 412, a third vent plate 413, and a fourth vent plate 414. For the convenience of explanation, redundant descriptions of configurations that are the same as those discussed with reference to FIGS. 3 to 6 will be omitted.

Referring to FIG. 9, the areas (e.g., size and shape) of the first surfaces of the respective vent plates 411, 412, 413, and 414 may be different from one another. For instance, the area of the first vent plate 411 may be greater than that of the second vent plate 412, the area of the second vent plate 412 may be greater than that of the third vent plate 413, and the area of the third vent plate 413 may be greater than that of the fourth vent plate 414. The areas of the first surfaces of the respective vent plates may be sequentially increased.

For example, a length h5 of the first sub-notch, a length h4 of the second sub-notch, a length h6 of the third sub-notch, and a length h3 of the fourth sub-notch may be different from one another and may be sequentially increased. For example, an intersection of the first and third sub-notches with the second and fourth sub-notches may be off-centered relative to the safety vent 410.

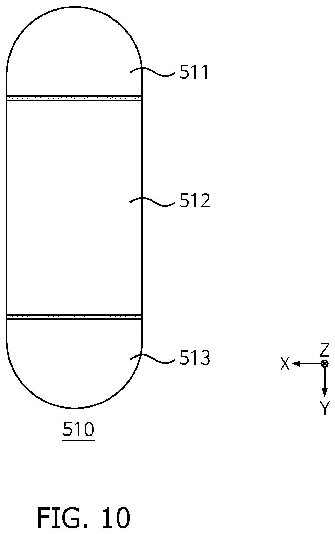

FIG. 10 is a plan view illustrating a safety vent according to an embodiment of the present disclosure.

Referring to FIG. 10, a safety vent 510 may include three vent plates, e.g., a first vent plate 511, a second vent plate 512, and a third vent plate 513. For the convenience of explanation, redundant descriptions of configurations that are the same as those discussed with reference to FIGS. 3 to 6 will be omitted.

For example, the safety vent 510 may include a plurality of vent plates arranged side by side in one direction, e.g., along the Y-axis direction in FIG. 10. In an embodiment, a first sub-notch may be formed between the first vent plate 511 and the second vent plate 512, and a second sub-notch may be formed between the second vent plate 512 and the third vent plate 513. For example, the first sub-notch and the second sub-notch notch may be parallel to each other. In another example, the first sub-notch and the second sub-notch may be formed not to intersect with each other on the first surfaces of the vent plates.

By way of summation and review, when a secondary battery is continuously exposed to high temperatures or is charged or discharged with high currents, internal gases may be generated due to cell degradation and other factors. In this regard, the internal gases generated in the secondary battery may cause an internal pressure within a can to be increased. Thus, the electrode assembly within the can may be damaged, thereby posing a risk of ignition. In response thereto, various efforts have been made to suppress melting of internal components or prevent ignition caused by damage to the internal components of the secondary battery.

According to some embodiments of the present disclosure, the safety vent may include a plurality of vent plates, each having a different rupture pressure. Each vent plate may be configured to rupture in response to a case where the internal pressure exceeds the rupture pressure of each vent plate. This configuration allows the plurality of vent plates of the safety vent to sequentially rupture, increasing the injection area during the time required for the internal gas generated by the charging and discharging process to be combusted.

According to some embodiments of the present disclosure, the plurality of vent plates of the safety vent can sequentially rupture starting from the vent plate having the lowest rupture pressure among the plurality of vent plates. By enabling the sequential rupture of the plurality of vent plates forming the safety vent, the pressure change in a short period of time may be reduced while the damage to the electrode assembly and the short circuit of the electrode plates may be prevented.

According to some embodiments of the present disclosure, the thickness and area of each vent plate constituting the safety vent may vary. Further, the width, depth, and thickness of each of the first notch and the second notch, as well as the minimum thickness of the connection portion, may also vary. This allows for the rupture pressures of the plurality of vent plates to be adjusted in various ways according to design requirements, enabling each vent plate to have a different rupture pressure.

However, aspects and features of the present disclosure are not limited to those described above, and other aspects and features not mentioned will be clearly understood by a person skilled in the art from the detailed description, described above.

Although the present disclosure has been described above with respect to embodiments thereof, the present disclosure is not limited thereto. Various modifications and variations can be made thereto by those skilled in the art within the scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (10), comprising:
an electrode assembly (120) including a first electrode (125), a separator (126), and a second electrode (127);
a case (160) accommodating the electrode assembly (120); and
a safety vent (110) at a side of the case (160), the safety vent (110, 210, 310, 410, 510) including a plurality of vent plates (111, 112, 113, 114, 211, 212, 311, 312, 313, 411, 412, 413, 414, 511, 512, 513), and each of the plurality of vent plates (111, 112, 113, 114) having a different rupture pressure.

2. The secondary battery (10) as claimed in claim 1, wherein respective thicknesses of the plurality of vent plates (111, 112, 113, 114, 211, 212, 311, 312, 313, 411, 412, 413, 414, 511, 512, 513) are different from one another.

3. The secondary battery (10) as claimed in claim 1 or claim 2, wherein respective areas of the plurality of vent plates (111, 112, 113, 114, 211, 212, 311, 312, 313, 411, 412, 413, 414, 511, 512, 513) are different from one another.

4. The secondary battery (10) as claimed in any one of the preceding claims, wherein the safety vent (110) includes a first notch (115, 116, 117, 118) between adjacent ones of the plurality of vent plates (111 112 113 114).

5. The secondary battery (10) as claimed in claim 4, wherein a connection portion between a first surface (135, 136, 137, 138) of each of the plurality of vent plates and an adjacent first surface (145) of the first notch (115, 116, 117, 118) has a different minimum thickness.

6. The secondary battery (10) as claimed in any one of the preceding claims, further comprising a second notch (119) between each of the plurality of vent plates and the case.

7. The secondary battery (10) as claimed in claim 6, wherein a connection portion between a first surface (135, 136, 137, 138) of each of the plurality of vent plates (111, 112, 113, 114) and an adjacent first surface of the second notch (119) has a different minimum thickness.

8. The secondary battery (10) as claimed in any one of the preceding claims, wherein the plurality of vent plates (111, 112, 113, 114) includes a first vent plate (111), a second vent plate (112), a third vent plate (113), and a fourth vent plate (114).

9. The secondary battery (10) as claimed in claim 8, wherein the safety vent (110, 410) is radially divided from an arbitrary point of the safety vent to define the first vent plate (111, 411), the second vent plate (112, 412), the third vent plate (113, 413), and the fourth vent plate (114, 414).

10. The secondary battery (10) as claimed in claim 8 or claim 9, wherein a thickness of the first vent plate (111) is greater than a thickness of the second vent plate (112), the thickness of the second vent plate (112) is greater than a thickness of the third vent plate (113), and the thickness of the third vent plate (113) is greater than a thickness of the fourth vent plate (114).

11. The secondary battery (10) as claimed in any one of claim 8 to 10, further comprising:
a first sub-notch (118) between the first vent plate (111) and the second vent plate (112);
a second sub-notch (115) between the second vent plate (112) and the third vent plate (113);
a third sub-notch (116) between the third vent plate (113) and the fourth vent plate (114); and
a fourth sub-notch (117) between the fourth vent plate (114) and the first vent plate (111).

12. The secondary battery (10) as claimed in claim 11, wherein a first minimum thickness of a connection portion between the first vent plate (111) and the first sub-notch (118), a second minimum thickness of a connection portion between the second vent plate (112) and the second sub-notch (115), a third minimum thickness of a connection portion between the third vent plate (113) and the third sub-notch (116), and a fourth minimum thickness of a connection portion between the fourth vent plate (114) and the fourth sub-notch (117) are sequentially increased.

13. The secondary battery (10) as claimed in claim 11 or claim 12, wherein the first sub-notch (118), the second sub-notch (115), the third sub-notch (116), and the fourth sub-notch (117) have a same thickness.

14. The secondary battery as claimed in any one of claims 8 to 13, further comprising:
a fifth sub-notch (119) between the first vent plate (111) and the case (160);
a sixth sub-notch (119) between the second vent plate (112) and the case (160);
a seventh sub-notch (119) between the third vent plate (113) and the case (160); and
a eighth sub-notch (119) between the fourth vent plate (114) and the case (160).

15. The secondary battery (10) as claimed in claim 14, wherein a first minimum thickness of a connection portion between the first vent plate (111) and the fifth sub-notch (119), a second minimum thickness of a connection portion between the second vent plate (112) and the sixth sub-notch (119), a third minimum thickness of a connection portion between the third vent plate (113) and the seventh sub-notch (119), and a fourth minimum thickness of a connection portion between the fourth vent plate (114) and the eighth sub-notch (119) are sequentially increased.
